# EUROPEAN PATENT APPLICATION

(11) **EP 4 723 330 A1**
(43) Date of publication of application: **08.04.2026**
(21) Application number: 25205520.7
(22) Date of filing: 30.09.2025
(51) Int. Cl.: H01M 50/213, H01M 50/503, H01M 50/51, H01M 50/516, H01M 50/522, H01M 50/179

(54) **BATTERY PACK**

(30) Priority: 02.10.2024 KR 20240134113
(71) Applicant: SAMSUNG SDI CO., LTD., Yongin-si, Gyeonggi-do 17084 (KR)
(72) Inventor: Yoo, Dae Hyeong, 16678 Suwon-si, Gyeonggi-do (KR); Ha, Jun Hwan, 16678 Suwon-si, Gyeonggi-do (KR)
(74) Representative: Gulde & Partner

(57) **Abstract**

A battery pack (1000) includes a plurality of battery cells (100) including a first battery cell (100a) and a second battery cell (100b), and a tab (200) electrically connecting the plurality of battery cells, and the tab includes a first joint portion (210) joined to the first battery cell and including a first material, and a second joint portion (220) joined to the second battery cell and including a second material.

## Description

### BACKGROUND

### 1. Field

Aspects of embodiments of the present disclosure relate to a battery pack.

### 2. Description of the Related Art

In general, recently, with the rapid spread of electronic devices that use batteries, such as mobile phones, notebook computers, and electric vehicles, the demand for high energy density and high capacity battery cells is rapidly increasing. Accordingly, research and development to improve the performance of lithium battery cells is being actively conducted.

Lithium battery cells are batteries that includes positive and negative electrodes that include active materials capable of intercalating and deintercalating lithium ions, and an electrolyte, and produce electrical energy through oxidation and reduction reactions when lithium ions are intercalated and deintercalated into/from the positive and negative electrodes.

### SUMMARY

The invention is defined by the appended claims. The description that follows is subjected to this limitation. Any disclosure lying outside the scope of said claims is only intended for illustrative as well as comparative purposes.

According to an aspect of one or more embodiments of the present invention, a battery pack including a tab connecting two or more battery cells is provided.

According to another aspect of one or more embodiments of the present invention, a battery pack including a tab including two or more materials is provided.

According to another aspect of one or more embodiments of the present invention, a battery pack including a tab having high welding reliability with a battery cell is provided.

However, aspects and technical problems to be solved by the present invention are not limited to the above-mentioned aspects and problems to be solved, and other aspects and problems to be solved not mentioned will be clearly understood by those skilled in the art from the following description.

### BRIEF DESCRIPTION OF THE DRAWINGS

The following drawings attached to this specification illustrate some embodiments of the present invention and, together with the detailed description of the invention to be described below, are provided for further understanding of the present invention; however, the present invention is not to be construed as being limited to matters described in the drawings.
FIG. 1 is a perspective view schematically showing a configuration of a battery pack according to an embodiment of the present invention;
FIG. 2 is a perspective view schematically showing a battery cell according to an embodiment of the present invention;
FIG. 3 is a cross-sectional view schematically showing the configuration of a battery cell according to an embodiment of the present invention;
FIG. 4 is a view schematically showing a configuration of a battery pack including a tab according to an embodiment of the present invention;
FIG. 5 is a top view schematically showing the configuration of a battery cell according to an embodiment of the present invention;
FIG. 6 is a side view schematically showing the configuration of a battery pack including a tab according to an embodiment of the present invention;
FIG. 7 is a perspective view schematically showing an upper portion of a tab according to an embodiment of the present invention;
FIG. 8 is a perspective view schematically showing a lower portion of a tab according to an embodiment of the present invention;
FIG. 9 is a perspective view schematically showing an upper portion of a tab according to an embodiment of the present invention; and
FIG. 10 is a perspective view schematically showing an upper portion of a tab according to an embodiment of the present invention.

### DETAILED DESCRIPTION

Herein, some embodiments of the present invention will be described in further detail with reference to the accompanying drawings. The terms or words used in the specification and claims are not to be interpreted as limited to their usual or dictionary meanings, and are to be interpreted as having meanings and concepts that are consistent with the technical concept of the present invention based on the principle that the present inventor can appropriately define the concepts of the terms in order to explain his or her invention in its best way. Accordingly, it is to be understood that the configurations shown in the drawings and the embodiments described herein are example embodiments of the present invention and are not intended to represent all of the technical ideas of the invention, and that there may be various equivalents and modifications that may be substituted at the time of this application.

In addition, when used herein, the terms "comprise" and "include" and/or "comprising", and "including" specify the presence of stated features, numbers, steps, operations, members, elements and/or groups thereof, but do not exclude the presence or addition of one or more other features, numbers, operations, members, elements and/or groups thereof.

In addition, to aid understanding of the invention, the accompanying drawings may not be drawn to scale, and dimensions of some components may be exaggerated. In addition, the same reference numbers may be assigned to the same components in different embodiments.

Although "first," "second," and the like may be used to describe various components, these components are not limited by these terms. These terms are used to distinguish one component from another, and unless specifically stated otherwise, it is to be understood that a first component may also be a second component.

Throughout the specification, unless specifically stated otherwise, each element may be singular or plural.

The arrangement of an arbitrary component on the "upper portion (or lower portion)" of a component or "above (or below)" the component means that the arbitrary component is not only disposed in contact with the upper surface (or lower surface) of the component, but also one or more other components may be interposed between the component and the arbitrary component disposed on (or under) the component.

In addition, when a component is described as being "on," "connected to," or "coupled to" another component, it is to be understood that the components may be directly coupled or connected to one another, but that one or more other components may be interposed between the components, or that each component may be connected, coupled, or linked through another component.

As used herein, the term "and/or" includes any and all combinations of one or more of the associated listed items. In addition, the use of "may" when describing embodiments of the present disclosure relates to "one or more embodiments of the present disclosure." Expressions such as "at least one" and "one or more" before a list of elements modify the entire list of elements and do not modify individual elements in the list.

Throughout the specification, when "A and/or B" is used, this means A, B, or A and B unless otherwise specified, and when "C to D" is used, this means C or more and D or less, unless otherwise specified.

When phrases such as "at least one of A, B, and C," "at least one of A, B, or C," "at least one selected from the group consisting of A, B, and C" or "at least one selected from A, B, and C" are used to specify a list of elements A, B, and C, the phrases can refer to any suitable combination.

The term "use" may be considered synonymous with the term "utilize." As used herein, the terms "substantially," "about," and similar terms are used as terms of approximation rather than as terms of degree, and are intended to take into account the inherent variation in measured or calculated values that will be recognized by those of ordinary skill in the art.

Although the terms "first," "second," "third," and the like may be used in this specification to describe various elements, components, regions, layers and/or sections, these elements, components, regions, layers and/or sections are not to be limited by these terms. These terms are used to distinguish one element, component, region, layer, or section from another element, component, region, layer, or section. Accordingly, a first element, component, region, layer, or section discussed below may be referred to as a second element, component, region, layer, or section without departing from the teachings of the embodiments.

The terminology used herein is for the purpose of describing embodiments of the present disclosure and is not intended to be limiting of the present disclosure.

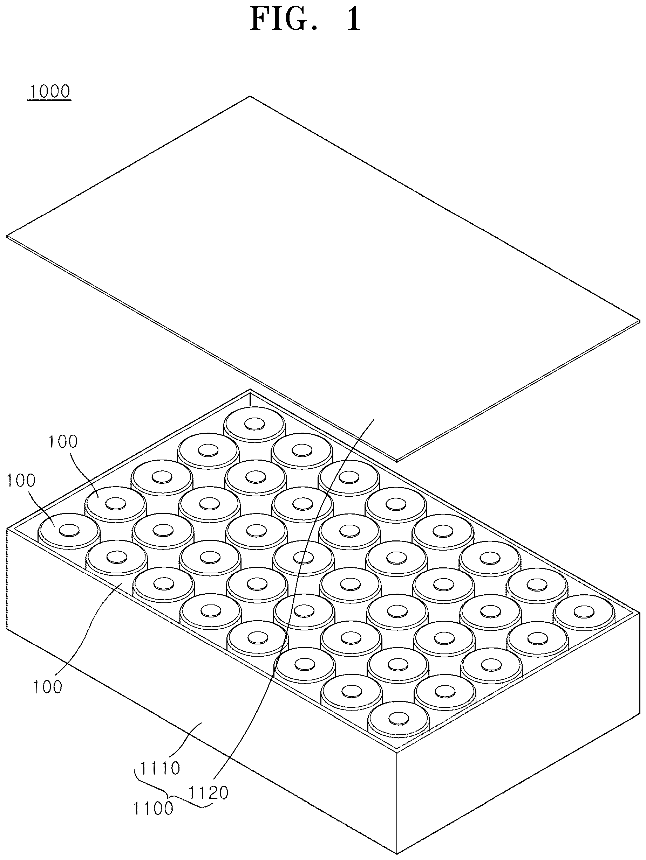

FIG. 1 is a perspective view schematically showing a configuration of a battery pack according to an embodiment of the present invention.

A battery pack 1000 according to an embodiment of the present invention may include a housing 1100 and one or more battery cells 100.

The housing 1100 generally forms an exterior of the battery pack and may provide a space in which battery cells 100 may be accommodated.

The housing 1100 may include a housing body 1110 and a cover 1120.

The housing body 1110 may be formed to have a shape of a box with an empty interior and an open side. A cross-sectional shape of the housing body 1110 is not limited to the rectangular shape shown in FIG. 1, and may have any of various shapes, such as a polygon, a circle, or an oval.

The cover 1120 may be coupled to the housing body 1110 and close an internal space of the housing body 1110. For example, the cover 1120 may be formed to have a generally plate shape and be disposed to face the open side of the housing body 1110. The cover 1120 may be fixed to the housing body 1110 by any of various types of joining methods, such as bolting, welding, and fitting.

The battery cell 100 can function as a unit structure that stores and supplies power in a battery pack.

The battery cell 100 may be provided as a plurality of battery cells. The plurality of battery cells 100 may be disposed in any of various patterns, such as a grid shape or a zigzag shape, inside the housing 1100. The plurality of battery cells 100 may be disposed parallel to each other. A number of the battery cells 100 may be varied depending on a size, shape, and the like of the housing 1100. A further detailed configuration of the battery cell will be described below.

Herein, a battery cell 100 according to an embodiment of the present invention will be described.

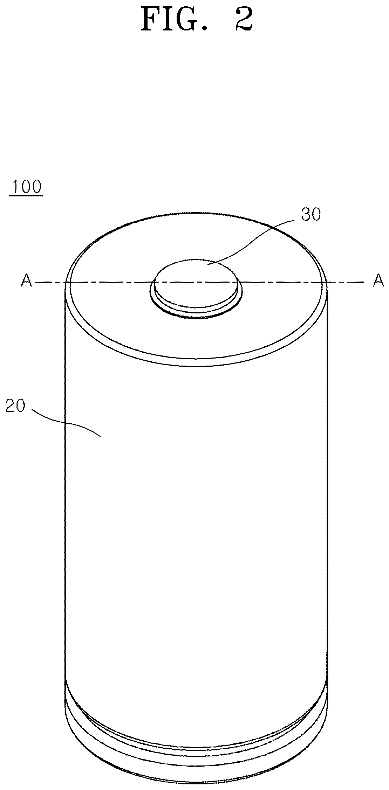

FIG. 2 is a perspective view schematically showing a battery cell according to an embodiment of the present invention.

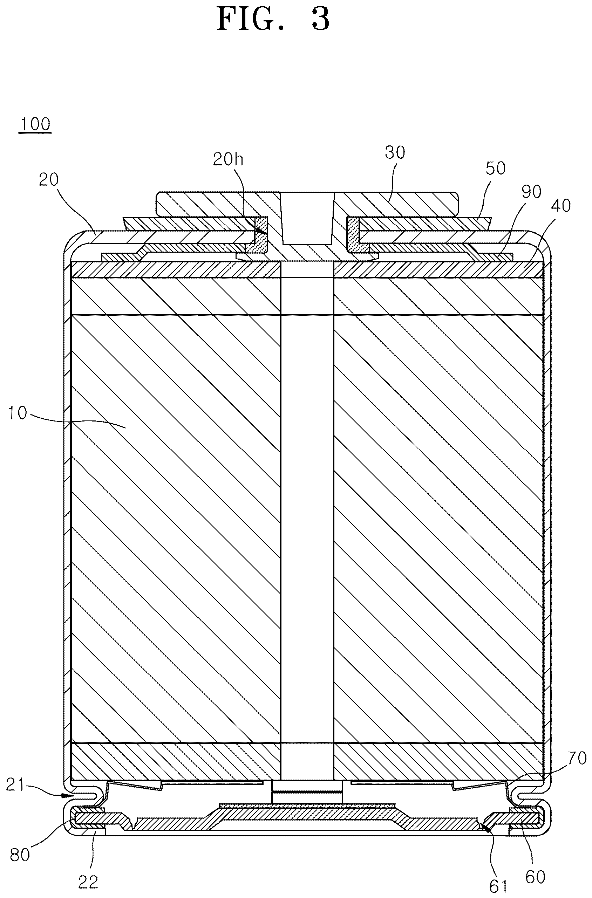

FIG. 3 is a cross-sectional view schematically showing a configuration of a battery cell according to an embodiment of the present invention.

In FIGS. 2 and 3, 100 represents a battery cell according to an embodiment of the present invention.

Referring to FIGS. 2 and 3, a battery cell 100 according to the present embodiment (e.g., including the battery cell 100 described in FIG. 1) includes an electrode assembly 10 and a case 20 that accommodates the electrode assembly 10. In addition, the battery cell 100 further includes a rivet 30 that is inserted into a hole 20h formed in a surface of the case 20 and electrically connected to the electrode assembly 10, and a cap plate 60 that covers an opening formed in another surface of the case 20. However, components of the battery cell 100 are not limited to the components illustrated in FIGS. 2 and 3, and the battery cell 100 may include only some of the components illustrated in FIGS. 2 and 3 and/or may further include other components in addition to the components illustrated in FIGS. 2 and 3.

In an embodiment, the battery cell 100 is a lithium ion battery cell, and a cylindrical battery cell is illustrated as an example. However, the present invention is not limited thereto, and the battery cell may be a lithium polymer battery or a prismatic battery, for example.

The electrode assembly 10 can function as a unit structure that performs charging and discharging operations of power in the battery cell 100.

The electrode assembly 10 includes a first electrode and a second electrode. The first electrode is a positive electrode or a negative electrode. The second electrode is a negative electrode or a positive electrode and has a different polarity from the first electrode.

In addition, the electrode assembly 10 may further include a separator between the first electrode and the second electrode. The separator can prevent or substantially prevent the first electrode and the second electrode from coming into contact with each other and prevent or substantially prevent a short circuit from occurring between the first electrode and the second electrode. Accordingly, the electrode assembly 10 may be formed by stacking a first electrode, a second electrode, and a separator provided between the first electrode and the second electrode.

In an embodiment, the electrode assembly 10 forms a cylindrical shape, and the stacked structure including the first electrode, the second electrode, and the separator may be wound to form a jelly roll. For example, the electrode assembly 10 may have a form that is wound in a clockwise or counterclockwise direction about a winding axis. A cross-sectional shape of the electrode assembly 10 may have any of various shapes, such as an oval shape or a polygon shape, in addition to a circular shape. Here, the winding axis may refer to a straight line passing through the center of the electrode assembly 10.

A further detailed description of each component of the electrode assembly 10 is as follows.

### Positive electrode active material

As a positive electrode active material, a compound capable of reversible intercalation and deintercalation of lithium (lithiated intercalation compound) may be used. In an embodiment, at least one composite oxide of lithium and a metal selected from cobalt, manganese, nickel, and a combination thereof may be used.

The composite oxide may be a lithium transition metal composite oxide, and specific examples thereof include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any of the following chemical formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high-nickel positive electrode active material in which a nickel content is 80 mol% or more, 85 mol% or more, 90 mol% or more, 91 mol% or more, or 94 mol% or more, and 99 mol% or less, based on 100 mol% of metals excluding lithium in a lithium transition metal composite oxide. The high-nickel positive electrode active material can achieve high capacity and thus may be applied to high-capacity, high-density lithium batteries.

### Positive electrode

A positive electrode for the battery cell 100 may include a current collector and a positive electrode active material layer formed on the current collector. The positive electrode active material layer includes a positive electrode active material and may further include a binder and/or a conductive material.

For example, the positive electrode may further include an additive that may act as a sacrificial positive electrode.

In an embodiment, the content of the positive electrode active material may be 90 wt% to 99.5 wt% based on 100 wt% of the positive electrode active material layer, and the contents of the binder and the conductive material may each be 0.5 wt% to 5 wt% based on 100 wt% of the positive electrode active material layer.

The binder may attach the positive electrode active material particles to each other well and also attach the positive electrode active material to the current collector well. Representative examples of binders include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like.

The conductive material imparts conductivity to an electrode, and any suitable material that does not cause chemical change and is electronically conductive may be used in the battery being constructed. Examples of conductive materials include carbon-based materials, such as natural graphite, artificial graphite, carbon black, acetylene black, Ketjen black, carbon fibers, carbon nanofibers, and carbon nanotubes; metal-based materials containing copper, nickel, aluminum, and silver in the form of metal powder or metal fibers; conductive polymers, such as polyphenylene derivatives; or mixtures thereof.

In an embodiment, Al may be used as the current collector, but the present invention is not limited thereto.

### Negative electrode active material

A negative electrode active material includes a material capable of reversibly intercalating/deintercalating lithium ions, a lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon include graphite, such as amorphous, platy, flaky, spherical or fibrous natural graphite or artificial graphite, and examples of the amorphous carbon include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles of which a surface is coated with amorphous carbon, for example, a secondary particle (core) in which silicon primary particles are assembled and an amorphous carbon coating layer (shell) located on the surface of the secondary particle. The amorphous carbon may also be located between the silicon primary particles, such that, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in a combination with a carbon-based negative electrode active material.

### Negative electrode

A negative electrode for the battery cell 100 includes a current collector and a negative electrode active material layer located on the current collector. The negative electrode active material layer includes a negative electrode active material and may further include a binder and/or a conductive material.

In an embodiment, for example, the negative positive active material layer may include 90 to 99 wt% of the negative positive active material, 0.5 to 5 wt% of the binder, and 0 to 5 wt% of the conductive material.

The binder may attach the negative electrode active material particles to each other well and also attach the negative electrode active material to the current collector well. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenol resin, epoxy resin, polyvinyl alcohol, and combinations thereof.

When using an aqueous binder as the negative electrode binder, a cellulose-based compound capable of imparting viscosity may be further included. As the cellulose-based compound, one or more types, such as carboxymethyl cellulose, hydroxypropyl methyl cellulose, methyl cellulose, or alkali metal salts thereof may be used in combination. In an embodiment, as the alkali metal, Na, K, or Li may be used.

The dry binder is a polymeric material capable of fiberization, and may be, for example, polytetrafluoroethylene, polyvinylidene fluoride, a polyvinylidene fluoride-hexafluoropropylene copolymer, polyethylene oxide, or a combination thereof.

The conductive material imparts conductivity to an electrode, and any suitable material that does not cause chemical change and is electronically conductive may be used in the battery being constructed. Some examples include carbon-based materials, such as natural graphite, artificial graphite, carbon black, acetylene black, Ketjen black, carbon fibers, carbon nanofibers, and carbon nanotubes; metal-based materials containing copper, nickel, aluminum, and silver in the form of metal powder or metal fibers; conductive polymers, such as polyphenylene derivatives; or mixtures thereof.

In an embodiment, the negative electrode current collector may be selected from a copper foil, a nickel foil, a stainless steel foil, a titanium foil, a nickel foam, a copper foam, a polymer substrate coated with a conductive metal, and a combination thereof.

### Separator

Depending on a type of battery cell 100, a separator may be present between the positive electrode and the negative electrode. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may be used.

The separator may include a porous substrate, and a coating layer including an organic material, an inorganic material, or a combination thereof located on one side or both, or opposite, sides of the porous substrate.

The porous substrate may include a film formed of at least one polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyether imide, polyamide imide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be present in a mixed form in one coating layer or may be present in a form in which a coating layer including the organic material and a coating layer including the inorganic material are stacked.

The case 20 accommodates the electrode assembly 10. The case 20 seals the accommodated electrode assembly 10 together with the electrolyte.

### Electrolyte

An electrolyte for the battery cell 100 contains a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent may include methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. Ethyl alcohol, isopropyl alcohol, and the like may be used as the alcohol-based solvent, and nitriles such as R-CN (where R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes, and the like may be used as the aprotic solvent.

The non-aqueous organic solvent may be used alone or in combination of two or more.

In addition, if using the carbonate-based solvent, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and acts as a source of lithium ions within the battery, enabling the basic operation of the lithium battery and promoting the movement of lithium ions between the positive electrode and negative electrode. Representative examples of lithium salts may include one or two or more selected from LiPF₆, LiBF₄, LiSbF₆, LiAsF₆, LiCIO₄, LiAlO₂, LiACl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

As described above, the case 20 is sealed after accommodating the electrode assembly 10 and the electrolyte. For example, the case 20 may be sealed by the cap plate 60.

In an embodiment, the case 20 generally forms an exterior of the battery cell 100. In an embodiment, the case 20 includes an upper surface forming a cylindrical upper portion, and side surfaces that are connected to an outer circumferential surface of the upper surface and extend vertically from the upper surface to form side portions.

The case 20 may have a hole 20h formed in the upper surface. The hole 20h is formed by passing through the upper surface of the case 20. The hole 20h may be located at a center of the upper surface of the case 20. The hole 20h may be formed, for example, above a winding core of the electrode assembly 10. A shape of the hole 20h may correspond to a shape of the rivet 30. For example, if a cross-section of the rivet 30 is circular, the cross-section of the hole 20h may be formed in a circular shape. In an embodiment, a diameter of the cross-section of the hole 20h is larger than the diameter of the cross-section of the rivet 30.

In an embodiment, the case 20 may have a cylindrical lower portion that is open. The case 20 may be sealed internally by having the opening sealed by a cap plate 60. Accordingly, the case 20 may prevent or substantially prevent electrolyte from leaking to the outside and protect the electrode assembly 10.

In an embodiment, the case 20 may be manufactured from, for example, steel, stainless steel, aluminum, an aluminum alloy, a combination thereof, or an equivalent thereof.

The cap plate 60 seals the case 20 by covering the opening of the case 20.

In an embodiment, the battery cell 100 may further include a gasket 80 to ensure sealing of the case 20. The gasket 80 is formed, for example, in a ring shape. The gasket 80 may be located between the cap plate 60 and the inner circumferential surface of the case 20 while surrounding the outer circumferential surface of the cap plate 60. The gasket 80 may prevent or substantially prevent the electrolyte inside the battery cell 100 from leaking to the outside or causing a safety problem.

In an embodiment, the case 20 may be formed with a beading portion 21 to fix a position of the cap plate 60 to the opening of the case 20. For example, the beading portion 21 is formed on the lower side of the case 20. The beading portion 21 is formed by a concave inward portion of the case 20. The beading portion 21 prevents or substantially prevents the cap plate 60 from entering further into the case 20 through the opening of the case 20 through the concave portion. In an embodiment, the case 20 may be further formed with a crimping portion 22 to fix the position of the cap plate 60 to the opening of the case 20. The crimping portion 22 may be formed by the end of the opening of the case 20 being curled toward the inside of the case 20. For example, the crimping portion 22 may be formed by bending toward the case 20 after the cap plate 60 is provided in the opening of the case 20. This allows the cap plate 60 to cover the opening of the case 20.

In an embodiment, the cap plate 60 may concurrently (e.g., simultaneously) perform the role of a vent. For example, the cap plate 60 may include a groove 61. The groove 61 may be broken if the pressure or temperature inside the case 20 increases. The groove 61 may release gas generated inside the case 20 to the outside if broken.

The case 20 is electrically connected to the electrode assembly 10 accommodated inside the case 20. For example, the case 20 is electrically connected to the second electrode. The second electrode may be, for example, a negative electrode.

The battery cell 100 may further include a second current collector plate 70 located at the lower portion of the electrode assembly 10 to electrically connect the case 20 and the second electrode. For example, the second current collector plate 70 may be located between the lower portion of the electrode assembly 10 and the upper portion of the cap plate 60.

The second current collector plate 70 and the cap plate 60 may be insulated from each other by the gasket 80. The second current collector plate 70 is, for example, a negative electrode current collector plate. The second current collector plate 70 is connected to the second electrode to collect current. For example, the second current collector plate 70 is connected to the tab of the second electrode. In an embodiment, the second current collector plate 70 is connected to the case 20. Through this, the case 20 is electrically connected to the second electrode and may have a same polarity as the second electrode. That is, for example, the case 20 may have a negative polarity.

The rivet 30 is inserted into the hole 20h formed in the upper surface of the case 20. The rivet 30 is inserted into the hole 20h and electrically connected to the electrode assembly 10 accommodated inside the case 20. For example, the rivet 30 is electrically connected to the first electrode. The first electrode may be, for example, a positive electrode.

The battery cell 100 may further include a first current collector plate 40 located on the upper portion of the electrode assembly 10 to electrically connect the rivet 30 and the first electrode. The first current collector plate 40 is, for example, a positive electrode current collector plate. The first current collector plate 40 is connected to the first electrode to collect current. For example, the first current collector plate 40 is connected to the tab of the first electrode. In addition, the first current collector plate 40 is connected to the rivet 30. Through this, the rivet 30 may be electrically connected to the first electrode and have a same polarity as the first electrode. That is, for example, the rivet 30 may have a positive polarity.

The rivet 30 may include a conductive material to be electrically connected to the first electrode. In an embodiment, for example, the rivet 30 includes a metal. In an embodiment, for example, the rivet 30 includes aluminum (Al).

The battery cell 100 may further include an insulating layer 90. The insulating layer 90 may be provided on the first current collector plate 40. The insulating layer 90 prevents or substantially prevents the first current collector plate 40 and the case 20 from being electrically connected.

Through this configuration, the battery cell 100 according to an embodiment of the present invention may be provided as a battery with improved capacity by eliminating an upper beading portion. In addition, by locating the cap plate 60 at the bottom, the battery cell 100 may solve safety or financial issues that may arise if the battery cell 100 explodes upward.

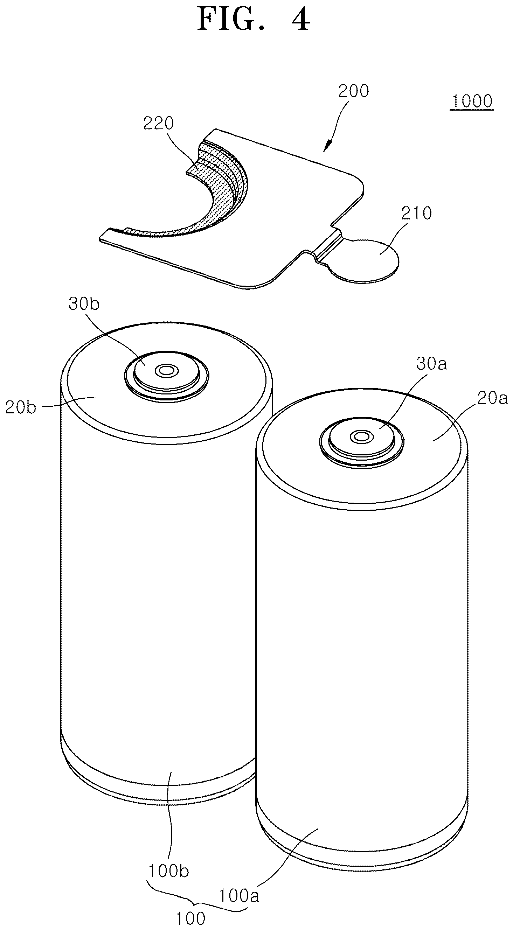

FIG. 4 is a view schematically showing a configuration of a battery pack including a tab according to an embodiment of the present invention.

A battery pack 1000 according to an embodiment of the present invention includes a plurality of battery cells 100 including a first battery cell 100a and a second battery cell 100b; and a tab 200 electrically connecting the plurality of battery cells 100, wherein the tab 200 includes a first joint portion 210 connected to the first battery cell 100a; and a second joint portion 220 connected to the second battery cell 100b.

As described in FIG. 1, the battery pack 1000 includes a plurality of battery cells 100. As described in FIGS. 2 and 3, the battery cell 100 may include, for example, a cylindrical battery.

The plurality of battery cells 100 include, for example, a first battery cell 100a and a second battery cell 100b. However, this is an example, and the battery pack 1000 may include three or more battery cells 100.

In an embodiment, the first battery cell 100a and the second battery cell 100b may be formed with the same specifications. The first battery cell 100a and the second battery cell 100b may be disposed adjacent to each other. Accordingly, some of a side surface of the first battery cell 100a and some of a side surface of the second battery cell 100b may face each other.

The first battery cell 100a and the second battery cell 100b may be electrically connected by a tab 200.

The tab 200 electrically connects at least two of the plurality of battery cells 100. Although not illustrated, the tab 200 may be mounted, for example, on a protection circuit module to electrically connect the battery cells 100. In an embodiment, the protection circuit module may include a printed circuit board (not shown) and one or more tabs 200 mounted on the printed circuit board.

The tab 200 electrically connects the first battery cell 100a and the second battery cell 100b. FIG. 4 illustrates an example in which a tab 200 connects a pair of battery cells 100 including two battery cells 100a and 100b, but the tab 200 may electrically connect a plurality of pairs of battery cells 100.

The tab 200 includes the first joint portion 210 connected to the first battery cell 100a and the second joint portion 220 connected to the second battery cell 100b.

The first joint portion 210 is electrically connected to the first electrode of the first battery cell 100a.

The second joint portion 220 is electrically connected to the second electrode of the second battery cell 100b. The second electrode of the second battery cell 100b may have a different polarity from the first electrode of the first battery cell 100a. For example, if the first electrode of the first battery cell 100a is a positive electrode, the second electrode of the second battery cell 100b is a negative electrode. For example, if the first electrode of the first battery cell 100a is a negative electrode, the second electrode of the second battery cell 100b is a positive electrode.

The battery pack 1000 according to an embodiment of the present invention electrically connects a plurality of battery cells 100 included in the battery pack 1000 through the tab 200.

If the bonding strength between the tab 200 and the battery cell 100 is insufficient, the electrical connection between the tab 200 and the battery cell 100 may become weak. In this case, the battery pack 1000 may not receive sufficient electrical energy from the battery cell 100 or may cause a safety problem during the charging and discharging process. Therefore, the tab 200 needs to be firmly fixed to each of two or more battery cells 100.

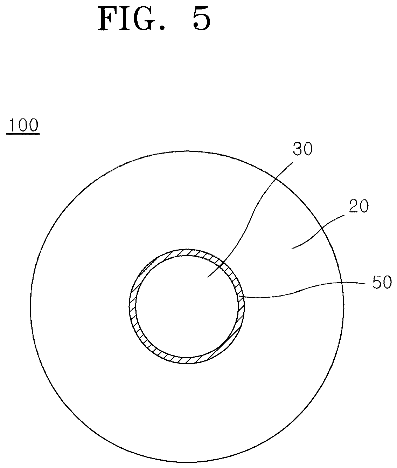

FIG. 5 is a top view schematically showing the configuration of a battery cell according to an embodiment of the present invention.

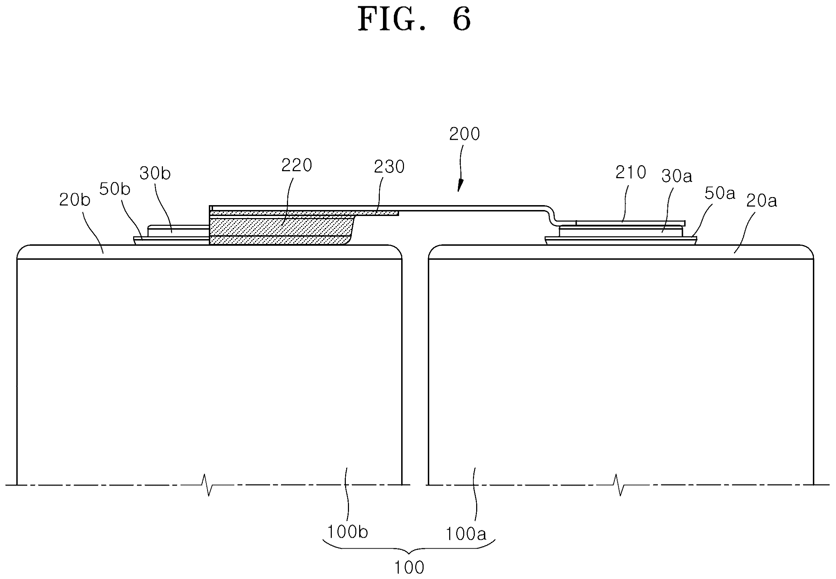

FIG. 6 is a side view schematically showing the configuration of a battery pack including a tab according to an embodiment of the present invention.

A battery cell 100 includes an electrode assembly 10 including a first electrode and a second electrode; a rivet 30 connected to the first electrode; and a case 20 accommodating the electrode assembly 10 and connected to the second electrode, wherein the rivet 30 is fitted into a hole 20h in a side of the case 20.

As illustrated in FIG. 5, the battery cell 100 includes a rivet 30 electrically connected to the first electrode, and a case 20 electrically connected to the second electrode.

In an embodiment, as described above, the rivet 30 is connected to the first electrode, and the case 20 is connected to the second electrode. That is, the case 20 and the rivet 30 have different polarities. In this case, if the case 20 and the rivet 30 come into contact, a short circuit may occur between the case 20 and the rivet 30.

In an embodiment, to avoid this, the battery cell 100 may further include an insulator 50 that insulates between the case 20 and the rivet 30.

The insulator 50 is located on a lower side of the rivet 30. In addition, the insulator 50 is located on the upper side of the case 20. The insulator 50 includes an insulating material. The insulator 50 is located between the case 20 and the rivet 30 and may insulate between the case 20 and the rivet 30. Accordingly, the insulator 50 prevents or substantially prevents a short circuit from occurring between the case 20 and the rivet 30.

For example, the first battery cell 100a includes a rivet 30a electrically connected to the first electrode and a case 20a electrically connected to the second electrode. The first battery cell 100a may further include an insulator 50a that insulates between the case 20a and the rivet 30a.

For example, the second battery cell 100b includes a rivet 30b electrically connected to the first electrode and a case 20b electrically connected to the second electrode. The second battery cell 100b may further include an insulator 50b that insulates between the case 20b and the rivet 30b.

The tab 200 electrically connects a plurality of battery cells 100.

The tab 200 includes the first joint portion 210 that is joined to the first battery cell 100a and includes or (essentially) consists of a first material; and the second joint portion 220 that is joined to the second battery cell 100b and includes or (essentially) consists of a second material.

The first joint portion 210 is joined to the rivet 30a of the first battery cell 100a. For example, the lower portion of the first joint portion 210 is joined to the upper surface of the first battery cell 100a. In an embodiment, for example, the first joint portion 210 may be joined to the rivet 30a of the first battery cell 100a by welding.

The first joint portion 210 includes or (essentially) consists of the first material.

The first material isi a material that is easily electrically connected to the first electrode of the first battery cell 100a. For example, the first material is formed of a conductive material, for example, a metal. For example, the first material may improve welding reliability with the case 20a of the first battery cell 100a.

In an embodiment, the first material is a material that is easy to weld to the rivet 30a of the first battery cell 100a. For example, the first joint portion 210 may be formed of the same material as the rivet 30a of the first battery cell 100a. For example, if the rivet 30a of the first battery cell 100a is formed of aluminum (Al), the first joint portion 210 may also be formed of aluminum (Al). In an embodiment, for example, the first joint portion 210 may include a material that is not the same as a material included in the rivet 30a of the first battery cell 100a, but is easily weldable to the material included in the rivet 30a of the first battery cell 100a. For example, if the rivet 30a of the first battery cell 100a is formed of aluminum (Al), the first joint portion 210 may be formed of nickel (Ni), copper (Cu), tungsten (W), silver (Ag), gold (Au), or an alloy thereof.

The first material of the first joint portion 210 may be determined according to the material of the rivet 30a of the first battery cell 100a.

The second joint portion 220 is joined to the case 20b of the second battery cell 100b. For example, the second joint portion 220 is joined to the upper surface of the case of the second battery cell 100b. In an embodiment, for example, the second joint portion 220 may be joined to the case of the second battery cell 100b by welding.

The second joint portion 220 includes or (essentially) consists of the second material.

The second material is a material that is easily electrically connected to the second electrode of the second battery cell 100b. For example, the second material includes a conductive material. In an embodiment, the conductive material is a metal. For example, the second material may improve welding reliability with the case 20b of the second battery cell 100b.

In addition, the second material is a material that is easy to weld to the case 20b of the second battery cell 100b. For example, the second joint portion 220 may be formed of the same material as the case 20b of the second battery cell 100b. For example, if the case 20b of the second battery cell 100b is formed of iron (Fe), the second joint portion 220 may be formed of iron (Fe). In an embodiment, for example, the second joint portion 220 may include or (essentially) consist of a material that is not the same as the material included in the case 20b of the second battery cell 100a, but has excellent welding reliability after welding with the case 20b of the second battery cell 100b. For example, if the case 20b of the second battery cell 100b is formed of iron, the second joint portion 220 may be formed of copper (Cu), nickel (Ni), tungsten (W), silver (Ag), gold (Au), titanium (Ti), or an alloy thereof.

The second material of the second joint portion 220 may be determined depending on a material of the case 20b of the second battery cell 100b.

The first material and the second material are different. In this way, the tab 200 may improve the welding strength of the objects to be joined by the first joint portion 210 and the second joint portion 220 by the first joint portion 210 and the second joint portion 220 including different materials. If the materials included in the objects to be joined by each of the first joint portion 210 and the second joint portion 220 are the same, the first material and the second material may be the same. In addition, for example, the second joint portion 220 may be formed from an alloy of the first material and the second material. In an embodiment, for example, the second joint portion 220 may be formed in the form of a clad of the first material and the second material.

In an embodiment, the first joint portion 210 and the second joint portion 220 may each be formed as separate structures. In addition, the tab 200 may include a connection portion 230 connecting the first joint portion 210 and the second joint portion 220. For example, the connection portion 230 may be formed by joining a side of the first joint portion 210 and a side of the second joint portion 220.

In this way, the tab 200 according to an embodiment of the present invention can improve the welding reliability with a plurality of battery cells 100 through joint portions 210 and 220 including different materials.

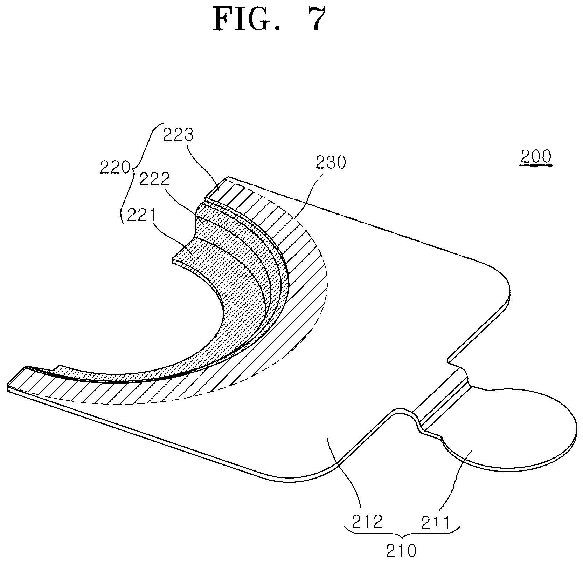

FIG. 7 is a perspective view schematically showing an upper portion of a tab according to an embodiment of the present invention.

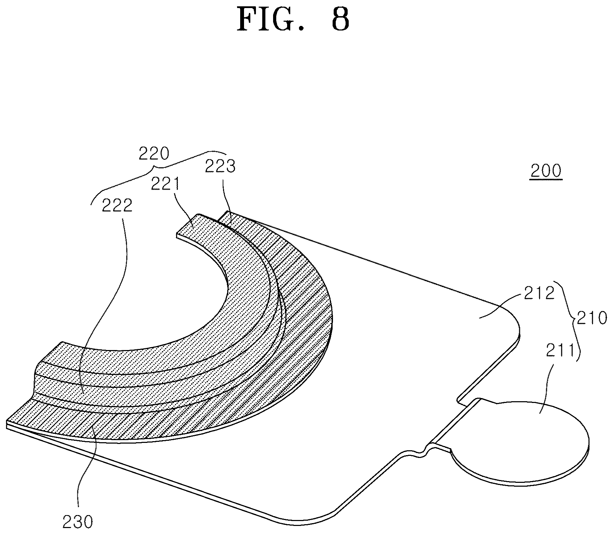

FIG. 8 is a perspective view schematically showing a lower portion of a tab according to an embodiment of the present invention.

As described in FIGS. 5 and 6, the tab 200 may include a first joint portion 210; a second joint portion 220; and a connection portion 230 connecting the first joint portion 210 and the second joint portion 220.

The first joint portion 210 includes a rivet joint portion 211 which is an area that is joined to the upper surface of the rivet 30a of the first battery cell 100a.

The rivet joint portion 211 may be formed in a flat plate shape corresponding to a shape of the upper surface of the rivet 30a so as to be easily joined to the rivet 30a of the first battery cell 100a. In an embodiment, the rivet joint portion 211 may be formed as a circular shape when viewed from above to correspond to a shape of the upper surface of the rivet 30a. However, the shape of the rivet joint portion 211 is formed to correspond to the rivet 30a of the first battery cell 100a, and is not limited thereto. For example, if the upper surface of the rivet 30a of the first battery cell 100a is formed with irregularities, the rivet joint portion 211 may have irregularities corresponding thereto.

The rivet joint portion 211 may be formed corresponding to the area of the upper surface of the rivet 30a to be electrically connected with the rivet 30a of the first battery cell 100a while reducing resistance. For example, if the area of the rivet joint portion 211 is less than 30% of the area of the upper surface of the rivet 30a, the electrical connection between the first joint portion 210 and the rivet 30a may become weak or the electrical resistance between the first joint portion 210 and the rivet 30a may become large. In addition, for example, if the area of the rivet joint portion 211 exceeds 120% of the area of the upper surface of the rivet 30a, the first joint portion 210 may interfere with the electrical connection between another adjacent tab (not shown) and another adjacent battery cell (not shown).

Accordingly, for example, when viewed from above, the area of the rivet joint portion 211 may be formed to be 30% to 120% of the area of the upper surface of the rivet 30a. For example, the area of the rivet joint portion 211 may be formed to be 50% to 110% of the area of the upper surface of the rivet 30a. For example, the area of the rivet joint portion 211 may be formed to be 80% to 100% of the area of the upper surface of the rivet 30a.

The second joint portion 220 includes a case joint portion 221 which is an area joined to the case 20b of the second battery cell 100b.

The case joint portion 221 may be joined to the upper surface of the case 20b of the second battery cell 100b. In an embodiment, the case joint portion 221 may be formed in a flat plate shape corresponding to the shape of the upper surface of the case 20b so as to be easily joined to the upper surface of the case 20b of the second battery cell 100b. In an embodiment, the case joint portion 221 may be formed in a circular, semicircular, or curved shape corresponding to the shape of the upper surface of the case 20b when viewed from above and including an opening through which a rivet 30b passes. In FIG. 7, a semicircular case joint portion 221 including an opening through which the rivet 30b passes is illustrated.

The case joint portion 221 may be formed corresponding to the area of the upper surface of the case 20b to be electrically connected with the case 20b of the second battery cell 100b while reducing resistance. For example, if the area of the case joint portion 221 is less than 10% of the area of the upper surface of the case 20b, the electrical connection between the second joint portion 220 and the case 20b may become weak or the electrical resistance between the second joint portion 220 and the case 20b may become large. In addition, for example, if the area of the case joint portion 221 exceeds 100% of the area of the upper surface of the case 20b, the second joint portion 220 may interfere with the electrical connection between another adjacent tab (not shown) and another adjacent battery cell (not shown).

Accordingly, for example, when viewed from above, the area of the case joint portion 221 may be formed to be 10% to 100% of the area of the upper surface of the case 20b. For example, the area of the case joint portion 221 may be formed to be 20% to 80% of the area of the upper surface of the case 20b. For example, the area of the case joint portion 221 may be formed to be 20% to 60% of the area of the upper surface of the case 20b. For example, the area of the case joint portion 221 may be formed to be 30% to 60% of the area of the upper surface of the case 20b. For example, the area of the case joint portion 221 may be formed to be 40% to 55% of the area of the upper surface of the case 20b.

In an embodiment, although not illustrated, the second joint portion 220 may be joined to the side surface of the second battery cell 100b. In this case, the second joint portion 220 may be fitted to the side surface of the case of the second battery cell 100b. In an embodiment, the second joint portion 220 may include an insulating layer formed on at least a part of the second joint portion 220 to avoid contact with other adjacent battery cells (e.g., including the first battery cell 100a) and including an insulating material.

The connection portion 230 connects the first joint portion 210 and the second joint portion 220 formed of different structures.

For example, the first joint portion 210 includes a first extension portion 212 extending from the rivet joint portion 211. The first extension portion 212 extends, for example, from the rivet joint portion 211 toward the second joint portion 220.

For example, the second joint portion 220 includes a second extension portion 223 extending from the case joint portion 221. The second extension portion 223 extends, for example, from the case joint portion 221 toward the first joint portion 210.

As illustrated in FIGS. 7 and 8, the connection portion 230 is formed by joining at least a part of the first extension portion 212 and at least a part of the second extension portion 223.

For example, the connection portion 230 may be formed by positioning at least a part of the first extension portion 212 overlapping at least a part of the second extension portion 223, and welding the overlapping area. In an embodiment, unlike as illustrated in FIGS. 7 and 8, for example, the connection portion 230 may be formed by positioning at least a part of the second extension portion 223 overlapping at least a part of the first extension portion 212, and welding the overlapping area. In an embodiment, for example, the connection portion 230 may be formed by bringing an end of the first extension portion 212 and an end of the second extension portion 223 into contact with each other, and welding the contact areas.

In an embodiment, for example, the connection portion 230 may be formed by ultrasonically welding at least a part of the first extension portion 212 and at least a part of the second extension portion 223. Through this, the connection portion 230 may be formed in a short period of time while increasing manufacturing efficiency.

In an embodiment, for example, the connection portion 230 may be formed by laser welding at least a part of the first extension portion 212 and at least a part of the second extension portion 223. For example, the connection portion 230 may be formed by pulse laser welding, single mode laser welding, multimode laser welding, or green laser welding. Through this, the connection portion 230 may allow at least a part of the first extension portion 212 and at least a part of the second extension portion 223 that include different materials to be easily welded without separate deformation or design constraints.

In an embodiment, as described in FIGS. 2 and 3, the rivet 30 is formed to protrude from a side of the case 20. Accordingly, the first joint portion 210 and the second joint portion 220 connecting the rivet 30 of the adjacent battery cell 100 and the case 20 may be formed at different heights. Accordingly, the second joint portion 220 may be formed with the case joint portion 221 in contact with the case 20 and the second extension portion 223 in contact with the first joint portion 210 at different heights. The second joint portion 220 may further include a step 222 connecting the case joint portion 221 and the second extension portion 223. In an embodiment, the first joint portion 210 may further include a step connecting the rivet joint portion 211 and the first extension portion 212.

As described above, the connection portion 230 may be formed by welding. In this case, for example, the connection portion 230 may form a weld bead. Accordingly, the connection portion 230 may be spaced apart from the battery cell 100 such that the welding bead does not interfere with the battery cell 100. In an embodiment, for example, the connection portion 230 is formed spaced apart from the rivet 30b of the second battery cell 100b. In an embodiment, the connection portion 230 is spaced apart from the case 20b of the second battery cell 100b. In an embodiment, the connection portion 230 may be spaced apart from the rivet 30a and/or the case 20a of the first battery cell 100a.

In an embodiment, the first joint portion 210 and the second joint portion 220 may be formed with different area ratios. For example, if the first material is less costly than the second material, the first extension portion 212 may be formed wider than the second extension portion 223 such that the first extension portion 212 extends further toward the second extension portion 223. In an embodiment, if the first material is a more expensive material than the second material, the second extension portion 223 may be formed wider than the first extension portion 212 such that the second extension portion 223 extends further toward the first extension portion 212.

In an embodiment, for example, the first material is aluminum, and the second material is copper. In this way, for example, the first material may include a less costly material than the second material. In an embodiment, as illustrated in FIGS. 7 and 8, the weld 230 may be formed relatively closer to the case joint portion 221 than to the rivet joint portion 211. In an embodiment, the weld 230 may be spaced apart from and not in contact with the case 20b and/or the rivet 30b of the second battery cell 100b.

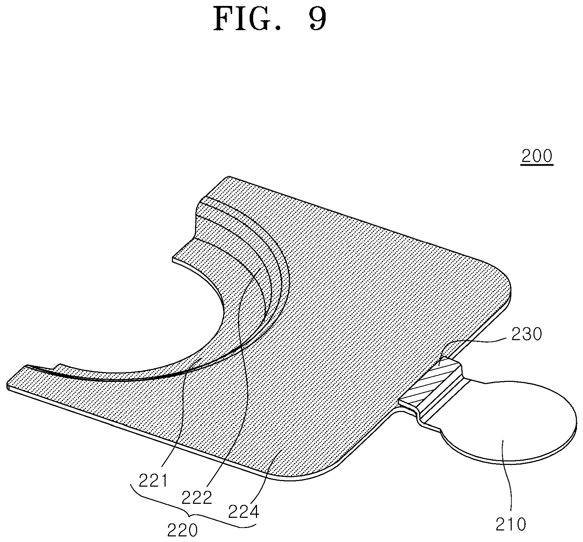

FIG. 9 is a perspective view schematically showing the upper portion of a tab according to an embodiment of the present invention.

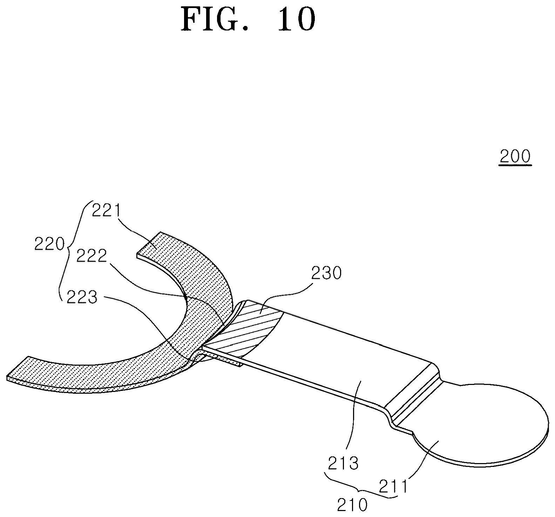

FIG. 10 is a perspective view schematically showing the upper portion of a tab according to an embodiment of the present invention.

As described in FIGS. 4 to 8, the tab 200 may include a first joint portion 210; a second joint portion 220; and a connection portion 230 connecting the first joint portion 210 and the second joint portion 220.

The first joint portion 210 includes the first material, and the second joint portion 220 includes the second material. As described in FIGS. 7 and 8, the area ratio between the first joint portion 210 and the second joint portion 220 may be determined based on the cost and/or properties of the first material and/or the second material. For example, if a cost of the first material is higher than that of the second material, the area of the first joint portion 210 may be formed wider than that of the second joint portion 220.

In FIGS. 9 and 10, other shapes of the first joint portion 210 and the second joint portion 220 are illustrated.

In an embodiment, for example, the second material may include a less costly material than the first material. In an embodiment, for example, the second material may have greater electrical conductivity and/or a greater ability to reduce electrical resistance than the first material.

In an embodiment, for example, as illustrated in FIG. 9, the second joint portion 220 may be formed wider than the first joint portion 210. For example, the second joint portion 220 includes a case joint portion 221 and a second extension portion 224. In an embodiment, the second extension portion 224 may be formed to extend further toward the first joint portion 210. Accordingly, the weld 230 may be formed closer to the rivet joint portion 211 than to the case joint portion 221.

In an embodiment, for example, both the second material and the first material may include expensive materials. In an embodiment, it may be desired to reduce the volume of the tab 200 by other components included in the battery pack 1000. In an embodiment, weight reduction of the battery pack 1000 may be desired.

In this case, for example, as illustrated in FIG. 10, the first joint portion 210 and/or the second joint portion 220 may be formed in a narrow area range.

In this way, the tab 200 according to an embodiment of the present invention may improve the welding reliability with the battery cell 100 through joint portions (e.g., 210 and 220) including different materials. Further, the battery pack 1000 according to an embodiment of the present invention may improve safety and/or charge/discharge efficiency by electrically connecting at least two of a plurality of battery cells 100 through the tab 200.

According to embodiments of the present invention, a battery pack including a tab having improved welding reliability is provided.

According to embodiments of the present invention, a battery pack including a tab having low cost is provided.

## Claims

1. A battery pack (1000) comprising:
a plurality of battery cells (100) comprising a first battery cell (100a) and a second battery cell (100b); and
a tab (200) electrically connecting the plurality of battery cells (100),
wherein the tab (200) comprises a first joint portion (210) joined to the first battery cell (100a) and comprising or consisting of a first material, and a second joint portion (220) joined to the second battery cell (100b) and comprising or consisting of a second material,
wherein the first material and the second material are different.

2. The battery pack (1000) as claimed in claim 1, wherein
a battery cell (100) of the plurality of battery cells (100) comprises: an electrode assembly (10) comprising a first electrode and a second electrode; a rivet (30, 30a, 30b) connected to the first electrode; and a case (20, 20a, 20b) accommodating the electrode assembly (10) and connected to the second electrode, and
the rivet (30, 30a, 30b) is fitted into an opening (20h) located at a side of the case (20, 20a, 20b).

3. The battery pack (1000) as claimed in claim 2, wherein
the first joint portion (210) comprises a rivet joint portion (211) that is joined to the rivet (30) of the first battery cell (100a), and
the second joint portion (220) includes a case joint portion (221) that is joined to the case (20b) of the second battery cell (100b).

4. The battery pack (1000) as claimed in claim 3, wherein the first joint portion (210) comprises or consist of the same material as the rivet (30a) of the first battery cell (100a).

5. The battery pack (1000) as claimed in claim 3, wherein the second joint portion (220) comprises or consist of the same material as the case (20b) of the second battery cell (100b).

6. The battery pack (1000) as claimed in claim 3, wherein
the case (20b) of the second battery cell (100b) comprises iron, and
the second joint portion (220) comprises at least one of copper, nickel, tungsten, silver, gold, titanium, and alloys thereof.

7. The battery pack (1000) as claimed in claim 3, wherein
the first joint portion (210) comprises a first extension portion (212) extending from the rivet joint portion (211) and the second joint portion (220) comprises a second extension portion (223, 224) extending from the case joint portion (221), and
the tab (200) comprises a connection portion (230) that connects at least a part of the first extension portion (212) and at least a part of the second extension portion (223).

8. The battery pack (1000) as claimed in claim 7, wherein the connection portion (230) is spaced apart from the rivet (30b) of the second battery cell (100b).

9. The battery pack (1000) as claimed in claim 7, wherein the connection portion (230) is spaced apart from the case (20b) of the second battery cell (100b).

10. The battery pack (1000) as claimed in claim 3, wherein the case joint portion (221) is welded and joined to a side of the case (20b) of the second battery cell (100b).

11. The battery pack (1000) as claimed in any one of the preceding claims, wherein the second joint portion (220) is comprises an alloy of the first material and the second material.
